# EUROPEAN PATENT SPECIFICATION

(11) **EP 0 594 240 B1**
(45) Date of publication and mention of the grant of the patent: **05.01.2000**
(21) Application number: 93202870.7
(22) Date of filing: 12.10.1993
(51) Int. Cl.: G06F 9/38, G06F 15/80, G06F 15/78, G06F 9/30

(54) **Data processor with operation units sharing groups of register files**
Datenprozessor mit Operationseinheiten, die gemeinsam Gruppen von Registerspeichern benutzen
Processeur comprenant des unités opérationnelles partageant des groupes de registres

(30) Priority: 19.10.1992 EP 92203192
(43) Date of publication of application: 27.04.1994
(73) Proprietor: Koninklijke Philips Electronics N.V., 5621 BA Eindhoven (NL)
(72) Inventor: Van Meerbergen, Jozef, c/o INT. OCTROOIBUREAU B.V., NL-5656 AA Eindhoven (NL); Hilderink, Hendricus A., c/o INT. OCTROOIBUREAU BV, NL-5656 AA Eindhoven (NL); Lippens, Paul E.R., c/o INT. OCTROOIBUREAU BV, NL-5656 AA Eindhoven (NL); Delaruelle, Antoine, c/o INT. OCTROOIBUREAU BV, NL-5656 AA Eindhoven (NL)
(74) Representative: Groenendaal, Antonius Wilhelmus Maria

(56) References cited:
- EP-A- 0 085 435
- EP-A- 0 359 192
- EP-A- 0 588 341
- WO-A-89/09447
- US-A- 4 760 545
- US-A- 5 109 499
- IEE PROCEEDINGS E. COMPUTERS & DIGITAL TECHNIQUES, vol. 139, no. 5 PART E, 1 September 1992 pages 439-449, XP 000319892 STEVEN G B ET AL 'IHARP: A MULTIPLE INSTRUCTION ISSUE PROCESSOR'

## Description

### FIELD OF THE INVENTION

The invention relates to a data processor comprising data processing means with a plurality of operation units, each respective one thereof for receiving respective data and executing a respective one of data processing operations on the respective data; at least two of the operation units having different functionality; register file means being connected to inputs of the data processing means and being operative to store data prior to supplying the data to the data processing means, the register file means comprising a plurality of physically separate register files; and an input of at least one of the operation units being exclusively connected to a first one of the register files.

### BACKGROUND ART

A data processor is a well known device that forms the heart of almost any computer. A data processor operates on input data to create output data by executing a prespecified algorithm. Typically, a processor functionally contains one or more of the following operation units: an arithmetic unit (e.g., ALU) to perform additions, subtractions, shifting, a multiplier (MUL) to multiply two data items, a random-access memory (RAM) to read and to write data, a read-only-memory (ROM) to only read data, an address calculation unit to provide addresses for access of the memories, or an application-specific unit (ASU). An ASU is a dedicated unit, typically used to execute operations that do not fit in with the instruction set of another operation unit within the restricted number of instruction cycles specified for that other operation unit. Mapping the surplus operations onto an ASU then may be more efficient than increasing the number of instruction cycles for the other operation unit or providing an additional operation unit of the same kind as the other operation unit.

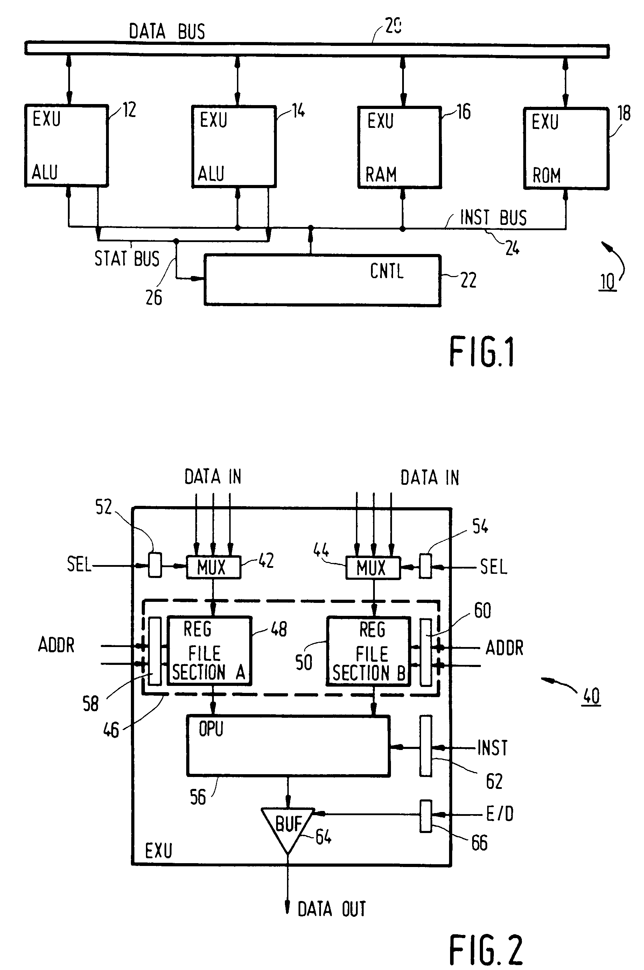

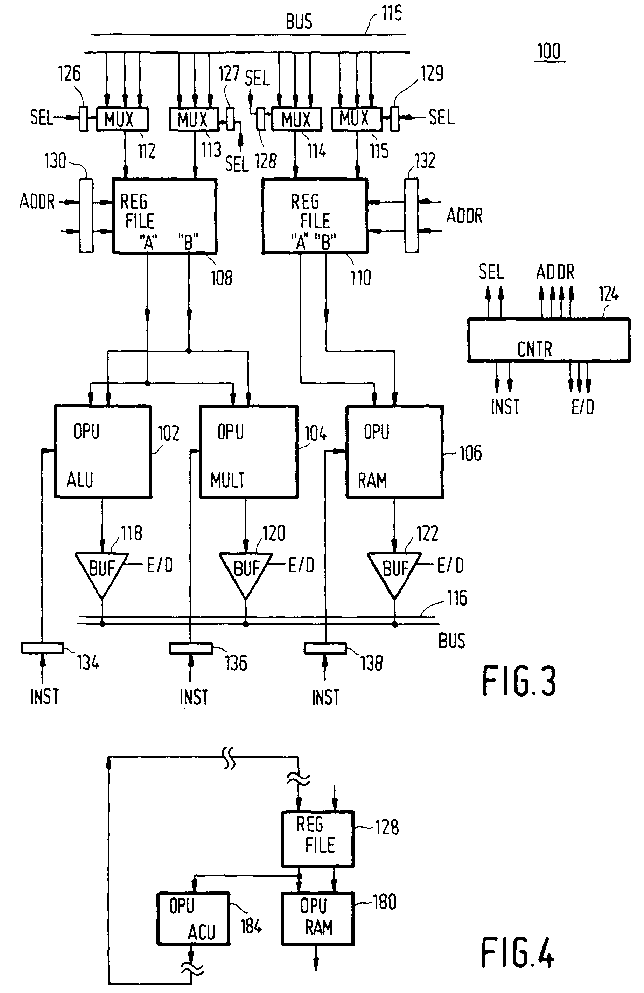

A processor as introduced in the preamble above is disclosed in "PIRAMID: An Architecture-Driven Silicon Compiler for Complex DSP Applications", by R. Woudsma, F.P.M. Beenker, J.L. Van Meerbergen and C. Niessen, 1990 IEEE International Symposium on Circuits and Systems, New Orleans, Louisiana, U.S.A., May 1-3, 1990, pp. 2596-2600. Figures 2 and 3 of this prior art document show a modular architecture for a processor. The architecture is automatically generated by a silicon compiler (PIRAMID) on the basis of a functional specification for the processor. Unlike a conventional data processor that is frozen in silicon and that therefore must be configured to be general purpose, the processor generated by PIRAMID is optimized to the application envisaged.

The prior art document's Figure 2 illustrates the processor's modular architecture having a plurality of execution units interconnected by data buses and controlled via a microcode program stored in a controller. The general structure of an execution unit is shown in the document's Figure 3. An execution unit is a functional and physical entity that performs one or more operations required to implement the algorithm. Each execution unit therefore comprises an operation unit, of the kind discussed above to actually perform the operation, and a register file to store the input data used as operands by the operation unit and to supply the input data to the operation unit when needed.

Generally, the register file comprises an "A"-register file section and a "B"-register file section. The "A"-register file section supplies the "A"-operand and the "B"-register file section supplies the "B"-operand to the operation unit. The operation unit thereupon operates on both operands. For instance, the operation unit may interpret both "A"- and "B"-operands as data to be subjected to a logic or mathematical operation. If the operation unit includes a RAM, it receives the "A"-operand as data to be stored at an address specified by the "B"-operand. Operations involving both "A"- and "B"-operands are called "dyadic" operations, whereas an operation involving only a single operand is called a "monadic" operation. As an example of the latter, an operation unit that includes a ROM only needs a single operand, namely a ROM's address. The ROM register file therefore only comprises an "A"-register file section.

A register file is a dual-ported device that is operative to execute a read operation and a write operation in a single instruction cycle. The register file serves as a fast foreground memory connected to the operation unit. A background memory is a single-ported device and can perform only one read operation or one write operation in a single instruction cycle. The background memory therefore is slow as compared to the foreground memory and is treated as an operation unit of a separate execution unit (e.g., RAM, ROM). Register files are addressed by the controller via an instruction register, whereas the background memory is addressed via address calculation units implemented in another execution unit. Note that each individual execution unit has its own register file.

### OBJECT OF THE INVENTION

Although the PIRAMID approach optimizes processor architecture to a large degree, the modularity may still lead to relatively large sized processor systems and a relatively inefficient use of the processor's capabilities. This may be due to, among other things, the execution units being optimized individually without taking into account functional inter-dependencies among the execution units for the specific application envisaged.

It therefore is an object of the invention to provide a data processor of the kind mentioned in the preamble that is smaller and more efficient than the prior art and that has at least the same capabilities as the prior art processor.

### SUMMARY OF THE INVENTION

To achieve these goals, the data processor is characterized in that a second one of the register files is connected to respective inputs of a second and a third one of the operation units.

In the invention, some of the operation units share the same register file, whereas other operation units share another register file or have separate register files not shared by other operation units. The invention is based on the insight that the register files of operation units have idle register locations for some time upon having supplied the locations' contents (i.e., operands) to the associated operation unit, and on the insight that a same operand may be used in several operation units simultaneously or dispersed in time. Accordingly, the register files for two or more of the operation units may physically and functionally be merged with one another, depending on the application of the processor.

For example, in iterative operations a first operation unit and a second operation unit receive the same operand(s) from a shared register file. The first unit processes the operand(s) in a predetermined manner to supply the processing result to a third operation unit, whereas the second unit calculates on the basis of the received operand(s) the subsequent operand(s) to be supplied to the first unit in a next iteration.

Advantages are manifold. The shared register file is smaller than a collection of separately employed register files. The use of shared register locations reduces the actual required register storage capability. Peripheral circuitry to implement the register's I/O functionality, such as the instruction register, is shared as well, leading to an additional reduction in size.

The microcode's data fields that relate to addresses of locations of merged registers may inherently be longer because the address space is increased for merged registers, but a single address data field now comes instead of the two or more address data fields of the prior art. Consequently, the width of a microcode word is reduced, and a smaller controller can be used. Rescheduling of the microcode instructions may be needed, as well as slightly extending the set of instructions. However, this may be well worthwhile in view of the advantages gained.

Further, a plurality of small circuit blocks usually requires a larger substrate area in an integrated circuit embodiment than a single larger circuit block with the same functionality. This is due to the fact that the circuit block's elements typically do not completely occupy the substrate area that is to be reserved for the circuit block in view of the safety margins and resolution in the IC technology used. In addition, in a computer-aided design environment the lay-out of a circuitry building block for use on a chip is automatically generated on the basis of specifications of a parameter format. Typically, the generated lay-out for a building block is comprised in a rectangle to be reserved on the chip's area in view of simple interconnection leads to be added later on. The fraction of the chip's not-occupied space increases for an increasing number of rectangles. Moreover, the automatic generation of a lay-out may be optimized for a particular parameter value or for a range of parameter values, e.g., for memory size or memory capacity. Beyond the optimized range the associated lay-out may be using the chip's area less efficiently. Merging the same functionalities of a plurality of blocks within a single block or a few blocks therefore reduces the size of not-occupied areas in proportion.

In the processor of the invention, the operation units are non-uniform. That is, operation units may have mutually different functionalities and, therefore, non-uniform architectures. Groupwise sharing of register files among the different operation units is advantageous for the processor as a whole.

It should be noted that from EP-A 0 588 341, which forms a prior right under Art.54(3) and (4) EPC, a processor is known which is capable of switching between parallel and serial operations. The processor has two ALUs (ALU1 and ALU2) and three register files. For a serial operation instruction, only ALU1 is used and ALU2 is stopped. In this mode, ALU1 has access to all three register files. For a parallel operation instruction, both ALUs are used. In this mode, each ALU has access to a dedicated register file and to a common register file. In the parallel mode, same type ALUs are operational, executing the same instruction. The document does not disclose the use of different types of operation units.

In a further embodiment of the invention, the second operation unit (180) is operative to execute a dyadic operation and the third operation unit (194) is operative to execute a monadic operation. Typically, the second operation unit comprises a memory (e.g., a RAM) and the third operation unit comprises an address calculating unit (ACU), which is advantageous, for instance, when the addresses are to be calculated iteratively.

Note that conventional data processors, other than those having a modular architecture such as the PIRAMID-processor mentioned above, may comprise a single oversized register file for all intended functionalities combined. The invention. however, concerns a dedicated data processor, wherein the modular approach is locally slightly modified to optimize for size, speed and cost. Specially in an integrated circuit embodiment, the invention provides many attractive features.

### BRIEF DESCRIPTION OF THE DRAWING

The invention is explained hereinafter by way of example and with reference to the accompanying drawing, wherein:
Figure 1 illustrates an example for the modular architecture of a data processor;
Figure 2 gives the prior art building block to implement the structure of Figure 1;
Figure 3 shows an example of a building block of the invention to implement the data processor of Figure 1; and
Figure 4 discloses a typical combination of operation units sharing the same register file.

### DETAILED DESCRIPTION OF THE EMBODIMENTS

### Processor Architecture

Figure 1 gives a schematic example of the architecture of a processor **10**. Processor **10** includes, among other things, execution units **12**, **14**, **16** and **18** that are interconnected via one or more data buses **20** for data communication among the execution units and whose operation are controlled by a controller **22**. Controller **22** supplies instructions to execution units **12-18** via an instruction bus **24**, possibly depending on status information, such as flags, received from execution units **12** and **14** via a status bus **26**, in order to enable data-dependent processing such as branching. Execution unit **12** implements an arithmetic unit functionality (ALU). Execution unit **14** comprises an address calculation unit (ACU) to generate optimized address sequences for memories, such as for execution unit **16** that includes a RAM and execution unit **18** that includes a ROM.

### Prior Art Execution Unit

Figure 2 shows a block diagram of a typical execution unit **40** in the prior art. Execution unit **40** is provided with multiplexers **42** and **44** at its input for time multiplexing within an application. Multiplexers **42** and **44** selectively couple data lines (not shown) of bus **20** to a register file **46** that includes an "A"-operand section **48** and a "B"-operand section **50**. Multiplexers **42** and **44** operate under control of controller **22** that supplies appropriate selection signals SEL via instruction registers **52** and **54.** Register file **46** stores the data, received from multiplexers **42** and **44**, and transfers the data to an operation unit **56** that receives the data as operands. Sections **48** and **50** receive read and write addresses (ADDR) from controller **22** via instruction registers **58** and **60**. Operation unit **56** executes an operation on the data received from register file **46** under control of an instruction received from controller **22** via instruction register **62**. The outcome of this operation is supplied to data bus **20** via a buffer **64** that is selectively enabled or disabled (E/D) by controller **22** via an instruction register **66**.

When the ROM functionality is implemented in execution unit **40**, multiplexer **44**, section **50** and instruction registers **54** and **60** are absent.

### Building Block of the Invention

Figure 3 schematically illustrates a building block according to the invention to implement the architecture of processor **10** in Figure 1. Block **100** comprises operation units **102**, **104** and **106** that receive their input data from register files **108** and **110**. Register file **108** receives the input data via multiplexers **112** and **113**, and register file **110** receives the input data via multiplexers **114** and **115**. Multiplexers **112**-**115** are connected to a bus **116.** The results provided by operation units **102**, **104** and **106** are supplied to bus **116** via buffers **118**, **120** and **122**, respectively. Multiplexers **112**-**115** are controlled by a controller **124** via instruction registers **126**, **127**, **128** and **129** through selection signals SEL. Addresses (ADDR) are furnished to register files **108** and **110** by controller **124** via instruction registers **130** and **132**. The modes of operation of operation units **102**,**104** and **106** are determined by controller **124** that supplies instructions (INST) via instruction registers **134**, **136** and **138**. Buffers **118**, **120** and **122** are selectively enabled and disabled (E/D) via controller **124**.

Note that the block of Figure 3 is adapted to be used as a higher level execution unit for collaborating with other execution units of the same kind or of the kind shown in Figure 2. Also note that, where throughout the drawings single lines are drawn to indicate inputs for receiving data or other signals, or to indicate interconnections, these lines may stand for buses several signal leads wide.

In the example shown, register file **108** is used to selectively provide operands to operation units **102** and **104** under control of controller **124**, whereas register file **110** supplies operation unit **106** with operands. It will be clear to the skilled person that register file **108** may be comprised of, say, two or more single-input register files (not shown) arranged in parallel, for supplying respective operands to two or more respective ones of the operation units of which only **102**,**104** and **106** are drawn. It will also be clear that in general further multiplexers (not shown) can be inserted between the outputs of at least some of the register files on the one hand and the inputs of some of the operation units on the other hand for scheduling appropriate distribution of the operands.

Operation units **102**-**106** are assumed to execute dyadic instructions in this example. As compared with the prior art, the register files for operation units **102** and **104** now are merged to provide a single register file.

### Typical Example

Figure 4 illustrates only the essentials for a typical example of a shared register file. Control features and I/O features are assumed to be similar to those of Figure 3. A RAM **180** stores data received via register file **182** at addresses received via register file **182** and provides data to bus **116**. An address calculating unit (ACU) **184** receives the same address as does RAM **180** for iteratively calculating the next address. The next address then is supplied to bus **116** and routed to register file **182** again. The interrupted interconnections in Figure 4 serve as reminders of the control and I/O features, here left out for brevity.

Whether or not the register files for several of the operation units can be merged together depends on the actual operations to be executed. In what manner the instruction set affects the merging of register files is explained as follows. In order to come up with a merging strategy, the designer may take as a basis an initial schedule for the operation units to indicate which one of the operation units is active in which one of the instruction cycles. The register files of operation units that are not active simultaneously, i.e., during the same instruction cycles, could be merged. However, such situations are rare. More likely, there will be operation units that for only a few instruction cycles will be active simultaneously. Merging the register files then still can be accomplished but at the expense of introducing additional instruction cycles to avoid conflicts. A slightly increased number of instruction cycles may well pay for teh advantage of merged register files. The designer could also consider operands used in more than one operation unit either simultaneously or in different instruction cycles. Such operand then requires a single register location only, which possibly will be occupied for a prolonged number of instruction cycles. It will be clear to the person skilled in the art that the saving of hardware will mainly depend on the program for whose execution the processor in the invention is to be created. It has been found that for an integrated circuit embodiment of a processor in the invention the saving of substrate area typically is in the order of 15% - 20%.

## Claims

1. A data processor comprising:
- data processing means (10) with a plurality of operation units (102, 104, 106), each respective one thereof for receiving respective data and executing a respective one of data processing operations on the respective data; at least two of the operation units having different functionality;
- register file means being connected to inputs of the data processing means and being operative to store data prior to supplying the data to the data processing means, the register file means comprising a plurality of physically separate register files (108, 110); and
- an input of at least a first one of the operation units (106) being exclusively connected to a first one of the register files (110);
characterized in that a second one of the register files (108) is connected to respective inputs of a second and a third one of the operation units (102, 104).

2. The processor of Claim 1, wherein the second operation unit (180) is operative to execute a dyadic operation and the third operation unit (194) is operative to execute a monadic operation.

3. The processor of Claim 2, wherein the second operation unit (180) comprises a memory and the third operation unit (184) comprises an address calculating unit.

4. The processor of Claim 1 implemented in an integrated circuit chip.

## Patentansprüche

1. Datenprozessor, der folgendes beinhaltet:
- Datenverarbeitungsmittel (10) mit einer Vielzahl von Operationseinheiten (102, 104, 106), die jeweils so ausgelegt sind, daß sie entsprechende Daten empfangen und eine entsprechende Datenverarbeitungsoperation an den entsprechenden Daten durchführen, wobei mindestens zwei der Operationseinheiten unterschiedliche Funktionen haben;
- Registerspeichermittel, die mit den Eingängen der Datenverarbeitungsmittel verbunden sind und so funktionieren, daß sie Daten speichern, bevor sie die Daten an die Datenverarbeitungsmittel weiterleiten, wobei die Registerspeichermittel eine Vielzahl von physisch getrennten Registerspeichern (108, 110) enthalten; und
- einen Eingang von mindestens einer der Operationseinheiten (106), der ausschließlich mit einem ersten Registerspeicher (110) verbunden ist;
dadurch gekennzeichnet, daß ein zweiter Registerspeicher (108) mit den entsprechenden Eingängen einer zweiten und einer dritten Operationseinheit (102, 104) verbunden ist.

2. Prozessor nach Anspruch 1, wobei die zweite Operationseinheit (180) so funktioniert, daß sie eine dyadische Operation durchführt, und die dritte Operationseinheit (194) so funktioniert, daß sie eine monadische Operation durchführt.

3. Prozessor nach Anspruch 2, wobei die zweite Operationseinheit (180) einen Spcicher umfaßt und die dntte Operationseinheit (184) eine Adreßrecheneinheit enthält.

4. Prozessor nach Anspruch 1, der in einer integrierten Schaltung realisiert ist.

## Revendications

1. Processeur de données comprenant :
- des moyens de traitement de données (10) comportant une pluralité d'unités opérationnelles (102, 104, 106), chaque unité respective de celles-ci pour recevoir des données respectives et exécuter une opération respective des opérations de traitement de données sur les données respectives; au moins deux des unités opérationnelles présentant une fonctionnalité différente;
- des moyens de groupe de registres connectés à des entrées des moyens de traitement de données et fonctionnant pour mémoriser les données avant de fournir les données aux moyens de traitement de données, les moyens de groupe de registres comprenant une pluralité de groupes de registres séparés physiquement (108; 110), et
- une entrée d'au moins une première des unités opérationnelles (106) étant exclusivement connectée à un premier des groupes de registres (110),
caractérisé en ce qu'un deuxième des groupes de registres (108) est connecté à des entrées respectives d'une deuxième et d'une troisième des unités opérationnelles (102, 104).

2. Processeur suivant la revendication 1, dans lequel la deuxième unité opérationnelle (180) fonctionne pour exécuter une opération dyadique et la troisième unité opérationnelle (194) fonctionne pour exécuter une opération monadique.

3. Processeur suivant la revendication 2, dans lequel la deuxième unité opérationnelle (180) comprend une mémoire et la troisième unité opérationnelle (184) comprend une unité de calcul d'adresse.

4. Processeur suivant la revendication 1, mis en oeuvre dans une puce de circuit intégré.
